# EUROPÄISCHE PATENTSCHRIFT

(11) **EP 1 023 823 B1**
(45) Veröffentlichungstag und Bekanntmachung des Hinweises auf die Patenterteilung: **30.07.2003**
(21) Anmeldenummer: 00100766.5
(22) Anmeldetag: 15.01.2000
(51) Int. Cl.: A01C 7/20, A01C 7/10

(54) **Landwirtschaftliche Verteilmaschine**
Agricultural distributor
Distributeur agricole

(30) Priorität: 21.01.1999 DE 19902272; 21.12.1999 DE 19961703
(43) Veröffentlichungstag der Anmeldung: 02.08.2000
(73) Patentinhaber: Amazonen-Werke H. Dreyer GmbH & Co. KG, 49205 Hasbergen (DE)
(72) Erfinder: Pietsch, Sascha, 49084 Osnabrück (DE); Kemper, Martin, Dipl.-Ing., 49205 Hasbergen (DE)

(56) Entgegenhaltungen:
- EP-A- 0 327 907
- FR-A- 2 423 963
- US-A- 3 422 776
- US-A- 4 159 064
- US-A- 4 616 577

## Beschreibung

Die Erfindung betrifft eine landwirtschaftliche Verteilmaschine gemäß des Oberbegriffes des Patentanspruches 1.
Entsprechend dem stand der Technik in US-A- 4159064.

Derartige landwirtschaftliche Verteilmaschinen sind in der Praxis in vielfältiger Weise bekannt. Bei diesen Maschinen werden verschiedene Funktionen durch Sensoren überwacht oder mittels Stellmotoren betätigt. Diese Sensoren und Stellmotoren sind mittels Übertragungsleitungen mit Steuerauswertungsund Regeleinrichtungen verbunden. Diese Übertragungsleitungen sind entlang von Rahmenteilen, Leitungen etc. verlegt und mittels Schnüren, Drähten, Kabelbindern etc. befestigt.

Diese Befestigung ist zeitaufwendig. Andererseits liegen die Leitungen teilweise in schlechtgeschützten Bereichen, so daß sie beschädigt oder abgerissen werden können.

Der Erfindung liegt die Aufgabe zugrunde, eine geschützte Verlegung von Übertragungsleitungen vorzuschlagen.

Diese Aufgabe wird erfindungsgemäß dadurch gelöst, daß die Übertragungsleitungen zumindest teilweise innerhalb der pneumatisch beaufschlagten Leitungen angeordnet sind. Infolge dieser Maßnahmen sind die Übertragungsleitungen, zumindest in den Bereichen, in denen sie üblicher Weise entlang von pneumatisch beaufschlagten Leitungen außerhalb von diesen verlegt werden, geschützt angeordnet und können so nicht beschädigt werden. Weiterhin ist die Verlegung und Montage der Übertragungsleitungen wesentlich vereinfacht. Auch ist es denkbar, die Übertragungsleitungen innerhalb der Hohlräume von Rahmenrohren etc. anzuordnen.

Um die Übertragungsleitungen in einfacher Weise in die Leitungen verlegen zu können, ist vorgesehen, daß die Übertragungsleitungen durch in den Wandungen der Leitungen angebrachten Bohrungen in die Leitungen eingebracht sind.

Bei einer Einzelkornsämaschine sind die Übertragungsleitungen durch die Unterdruckleitungen bis zu den Vereinzelungsorganen verlaufend geführt.

Eine einfache Befestigung und Abdichtung läßt sich durch die Merkmale des Patentanspruches 4 erreichen.

Eine sichere Anordnung der Übertragungsleitung im Bereich des Überganges von der Innenseite zur Außenseite der Unterdruckleitung wird dadurch erreicht, daß mittels der Bandage die Übertragungsleitung auf der Außenseite der Unterdruckleitung und somit an der Saugleitung befestigt ist.

Um eine Vormontage der Übertragungsleitung in den pneumatisch beaufschlagten Leitungen zu ermöglichen, um so die Endmontage der Leitungen mit den Übertragungsleitungen erheblich zu vereinfachen, ist vorgesehen, daß die Anschlußstutzen für die pneumatisch beaufschlagten Leitungen auf ihrer den Leitungen zugeordneten Seite jeweils eine an den Querschnitt der Übertragungsleitung angepaßte Aussparung aufweisen, und daß die Übertragungsleitungen in den Aussparungen verlegt angeordnet sind.

Eine vorteilhafte Ausgestatlung der Aussparungen wird dadurch erreicht, daß die Aussparungen als Nut und an ihrem Grund kreisbogenförmig ausgebildet ist. Aufgrund dieser Ausbildung ist die Aussparung in vorteilhafter Weise an die Form der Übertragungsleitung angepaßt ausgebildet.

Um eine vorteilhafte Anordnung der Übertragungsleitung in der Aussparung und der Übertragungsleitung innerhalb des Aufschubbereiches der pneumatischen Leitung auf dem Anschlußstutzen zu gewährleisten, ist vorgesehen, daß die Aussparung sich zumindest um das Maß des Durchmessers der Übertragungsleitung über den Aufschubbereich der pneumatisch beaufschlagten Leitung hinauserstreckt.

Eine einfache Anordnung der Aussparung auf den Anschlußstutzen läßt sich dadurch erreichen, daß die Anschlußstutzen für die pneumatisch beaufschlagten Leitungen als Adapter ausgebildet sind, und daß die Aussparung jeweils in den Adaptern angeordnet ist.

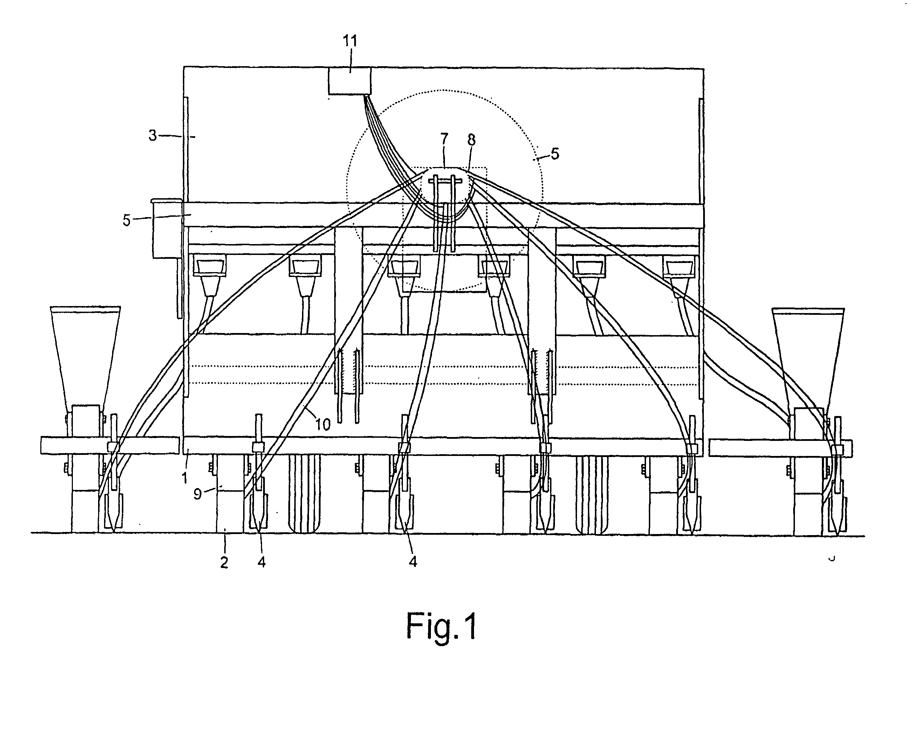

Weitere Einzelheiten der Erfindung sind der Beispielsbeschreibung und den Zeichnungen zu entnehmen. Hierbei zeigen
- Fig.1: eine als Einzelkornsämaschine ausgebildete landwirtschaftliche Verteilmaschine in Prinzipdarstellung,

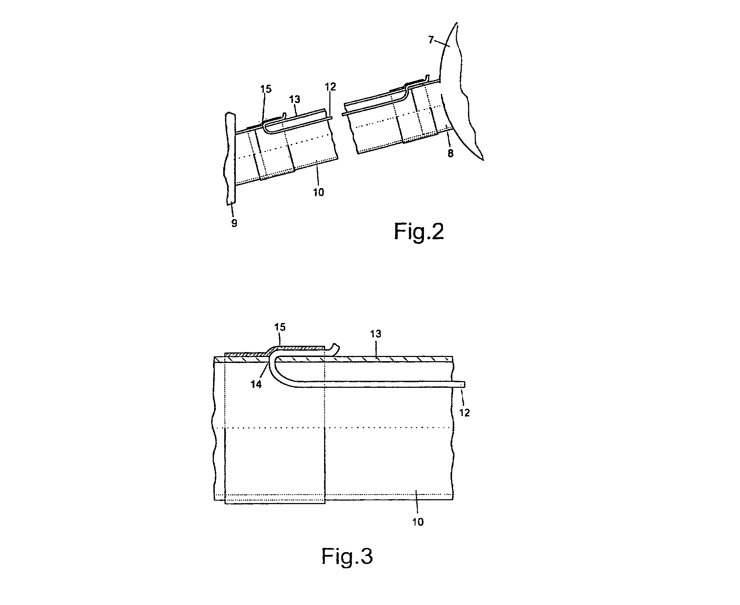

- Fig.2: eine Unterdruckleitung mit darin verlegter Übertragungsleitung in Teilschnitt und in vergrößertem Maßstab,
- Fig.3: einen Teilbereich der Übertragungsleitung in der Unterdruckleitung, im Bereich der Durchführung durch die Wandung der Unterdruckleitung mit darüber angeordneter Fixierungsbandage im Teilschnitt und in Prinzipdarstellung,
- Fig.4: die Anordnung der Übertragungsleitung in der Unterdruckleitung in Prinzipdarstellung,
- Fig.5: den als Anschlußstutzen ausgebildeten Adapter mit Aussparung in der Draufsicht,
- Fig.6: den Adapter im Schnitt VI-VI und
- Fig.7: den Adapter in der Ansicht VII-VII.

Die als Einzelkornsämaschine ausgebildete landwirtschaftliche Verteilmaschine weist den Rahmen 1 auf, an dem Einzelkornsäaggregate 2 und ein Düngervorratsbehälter 3 angeordnet sind. An dem Rahmen 1 sind weiterhin Düngersäschare 4 angeordnet, denen das sich im Düngervorratsbehälter 3 befindliche Material in einstellbaren Mengen zugeführt wird. Desweiteren ist an dem Rahmen 1 ein Unterdruckgebläse 5 angeordnet, welches ein Sauganschlußgehäuse 7 mit Anschlußstutzen 8 aufweist. An diesen Anschlußstutzen 8 sind die zu den Vereinzelungsorganen 9 der Einzelkornsäaggregate 2 führenden Saugschläuche 10 angeschlossen. Desweiteren ist jedem Einzelkornsäaggregat 2 ein Sensor einer Überwachungseinrichtung 11 zugeordnet. Die von den Sensoren zu der Auswerteeinrichtung der Überwachungseinrichtung 11 führenden Übertragungsleitungen 12 sind innerhalb der pneumatischbeaufschlagten Leitungen 10 angeordnet. Hierbei sind die Übertragungsleitungen 12 durch in den Wandungen 13 der Leitungen 12 angebrachten Bohrungen 14 in die Leitung 12 eingebracht.

In der Nähe des Vereinzelungsorgans 9 und in der Nähe des Anschlußstutzens 8 der Unterdruckleitung 10 sind zum Durchführen der Übertragungsleitungen 12 durch die Wandung 13 der Unterdruckleitung jeweils ein dem Durchmesser der Übertragungsleitung 12 entsprechender Durchbruch 14 in der Leitung 10 angebracht. Die Leitung 12 ist dann durch diese Bohrung 14 in das Innere der Unterdruckleitung 10 durchgeführt. Zum Fixieren der Übertragungsleitung 12 in der Bohrung 14 und an der Leitung 10 ist eine aus einem Schrumpfschlauch bestehende Fixierungsbandage 15 auf der Leitung 10 angeordnet. Hierbei befindet sich die Übertragungsleitung 12 zwischen der Außenwand der Leitung 10 und der Bandage 15. Mittels dieser Bandage 15 ist die Übertragungsleitung 12 auf der Außseite der Unterdruckleitung 10 und somit an der Saugleitung 10 befestigt. Die Übertragungsleitungen 12 sind durch die Unterdruckleitungen 10 von dem Sauggebläse 5 bzw. von einer geeigneten Stelle bis zu den Vereinzelungsorganen 9 durch die Unterdruckleitung 10 geführt.

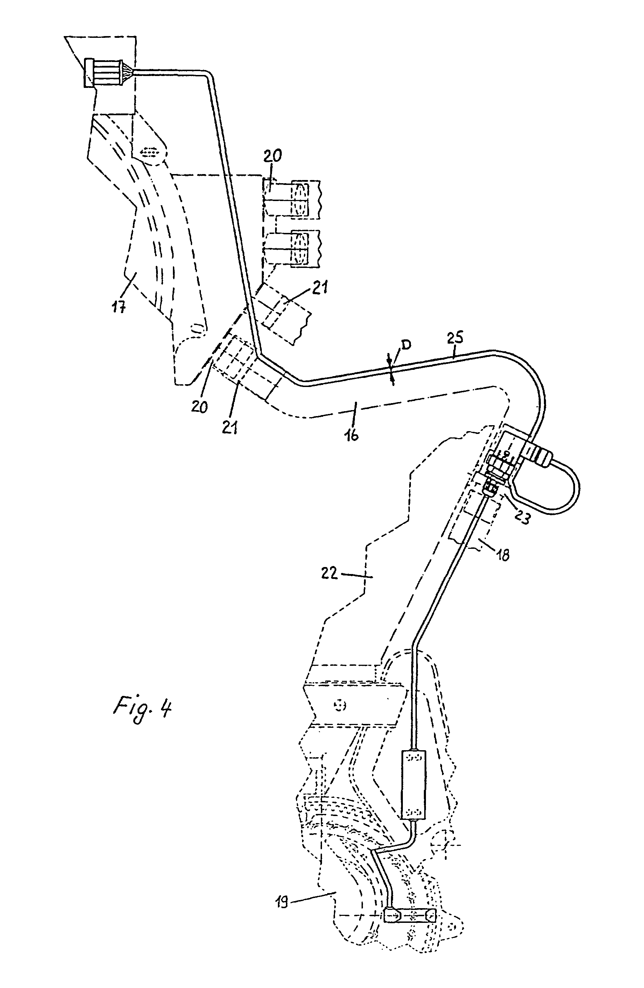

Die Fig.4 zeigt eine weitere Anordnung einer pneumatisch beaufschlagten Leitung 16 zwischen dem Sauggebläse 17 und der Anschlußleitung 18 an dem Vereinzelungsaggregat 19.

Auf den Gebläsestutzen 20 des Sauggebläses 17 sind die als Adapter 21 ausgebildeten Anschlußstutzen angeordnet. Desweiteren ist an dem jeweiligen Vorratsbehälter 22 der Einzelkornsäaggregate 19 ebenfalls ein als Adapter 21 ausgebildetes Anschlußstück auf dem Zwischenstück 23 angeordnet. Zwischen den beiden Adaptern 21 ist auf den Aufschubbereich 24 die pneumatisch beaufschlagte Leitung angeordnet. An dem Ende des Zwischenstückes 23, welches an dem Vorratsbehälter 22 des Einzelkornsäaggregates 19 angeordnet ist, ist die zu der Saugniere des Vereinzelungsaggregates führende Leitung 18 angeordnet.

In der pneumisch beaufschlagten Leitung 16, welche auf den Aufschubbereichen 24 der Anschlußstutzen 21 angeordnet ist, ist die Übertragungsleitung 25 angeordnet. Diese Übertragungsleitung 25 wird vor der Montage der Leitung 16 auf die Adapter 21 in diese Leitung 16 eingeschoben.

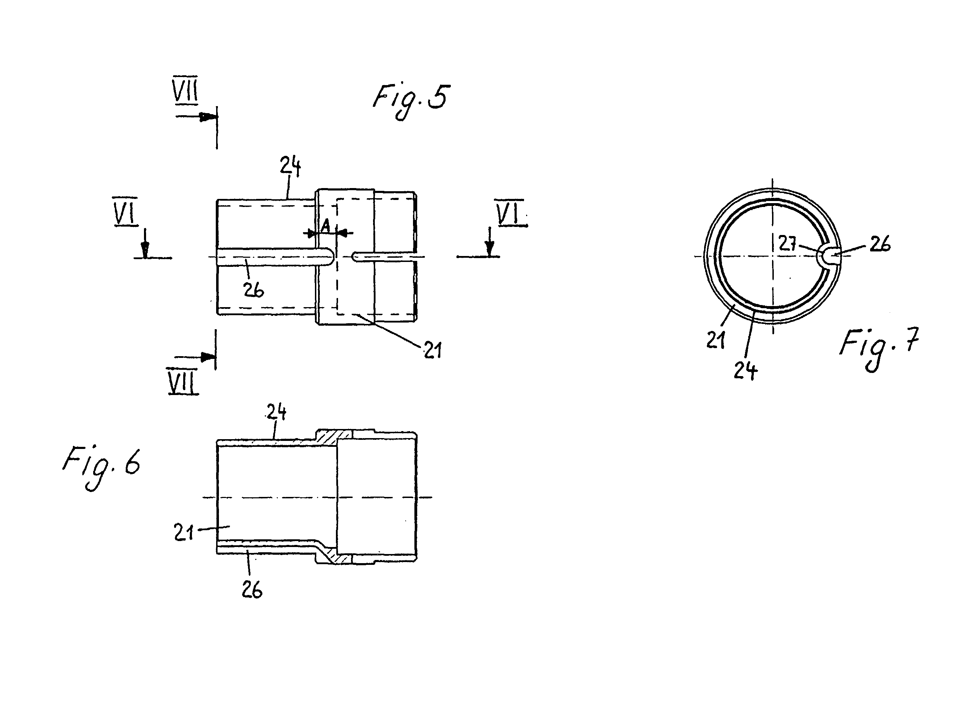

Auf den Gebläsestutzen 20 und dem Zwischenstück 23, welches am Vorratsbehälter 22 angeordnet ist, sind die in den Fig. 5 bis 7 dargestellten Adapter 21 aufgeschoben und mittels geeigneter Befestigungsmittel befestigt. Die Adapter 21, die die Anschlußstutzen für die pneumatisch beaufschlagten Leitungen 16 bilden, weisen auf ihrer den Leitungen 16 zugeordneten Seite jeweils eine an den Querschnitt der Übertragungsleitung 25 angepaßte Aussparung 26 auf. Diese Aussparung 26 ist als Nut ausgebildet und an ihrem Grund 27 kreisbogenförmig ausgestaltet. Die Aussparung 26 erstreckt sich um das Maß A, welches dem Durchmesser D der Übertragungsleitung 25 entspricht, über den Aufschubbereich 25 der pneumatisch beaufschlagten Leitung 16 hinaus, wie Fig. 5 und 6 zeigen. Nach der Anordnung der Übertragungsleitung 25 in der pneumatisch beaufschlagten Leitung 16 läßt sich die Leitung 16 mit der Übertragungsleitung 25 auf den als Adapter 21 ausgebildeten Anschlußstutzen aufschieben, wobei die Übertragungsleitung 25 und die Aussparung 26 so zueinander angeordnet bzw. ausgerichtet werden, daß die Übertragungsleitung 25 sich jeweils in der Aussparung 26 befindet, so daß die Übertragungsleitung 25 in den Aussparungen 26 verlegt angeordnet ist. Es ist auch möglich, daß zunächst nach dem Einbringen der Übertragungsleitung 25 in die Leitung 16 die Leitung 16 auf den Aufschubbereich 24 der als Adapter 21 ausgebildeten Anschlußstutzen geschoben und dort mittels Schlauchklemmen festgeklemmt wird, bevor die Adapter 21 auf die Stutzen 20 des Gebläses 16 und auf den Stutzen des Zwischenstückes 23, das an dem Vorratsbehälter 22 befestigt ist, angeordnet werden. In dieser Weise kann eine vorteilhafte Vormontage von Übertragungsleitung 25, Adapter 21 und Leitung 16 erfolgen.

## Patentansprüche

1. Landwirtschaftliche Verteilmaschine mit pneumatisch beaufschlagten Leitungen und Übertragungsleitungen aufweisenden Überwachungseinrichtungen, **dadurch gekennzeichnet, daß** die Übertragungsleitungen (12, 25) zumindest teilweise innerhalb der pneumatisch beaufschlagten Leitungen (10, 16) angeordnet sind.

2. Verteilmaschine nach Anspruch 1, **dadurch gekennzeichnet, daß** die Übertragungsleitungen (12) durch in den Wandungen (13) der Leitungen (10) angebrachten Bohrungen (14) in die Leitungen (10) eingebracht sind.

3. Verteilmaschine nach Anspruch 1, wobei die Verteilmaschine als Einzelkornsämaschine ausgebildet ist und von einem Sauggebläse (5) zu Vereinzelungsorganen (9) führenden Unterdruckleitungen (10) aufweist, **dadurch gekennzeichnet, daß** die Übertragungsleitungen (12) durch die Unterdruckleitung (10) bis zu den Vereinzelungsorganen (9) verlaufend geführt sind.

4. Verteilmaschine nach einem oder mehreren der vorstehenden Ansprüche, **dadurch gekennzeichnet, daß** zum Durchführen der Übertragungsleitung (12) durch die Wandung (13) der Unterdruckleitung (10) jeweils ein dem Durchmesser der Übertragungsleitung (12) entsprechender Durchbruch (14) in der Leitung (12) angebracht ist, daß zum Fixieren der Übertragungsieitung (12) in der Bohrung (14) und an der Leitung (10) eine, vorzugsweise aus einem Schrumpfschlauch bestehende Fixierungsbandage (15) auf der Leitung (10) angeordnet ist, daß die Übertragungsleitung (12) zwischen der Außenwand der Leitung (10) und der Bandage (15) sich befindet.

5. Verteilmaschine nach einem oder mehreren der vorstehenden Ansprüche, **dadurch gekennzeichnet, daß** mittels der Bandage (15) die Übertragungsleitung (12) auf der Außenseite der Unterdruckleitung (10) und somit an der Saugleitung (10) befestigt ist.

6. Verteilmaschine nach Anspruch 1, **dadurch gekennzeichnet, daß** die Anschlußstutzen (21) für die pneumatisch beaufschlagten Leitungen (16) auf ihrer den Leitungen (16) zugeordneten Seite jeweils eine an den Querschnitt der Übertragungsleitungen (25) angepaßte Aussparung (26) aufweisen, daß die Übertragungsleitungen (25) in den Aussparungen (26) verlegt angeordnet sind.

7. Verteilmaschine nach einem oder mehreren der vorstehenden Ansprüche, **dadurch gekennzeichnet, daß** die Aussparung (26) als Nut und an ihrem Grund (27) kreisbogenförmig ausgebildet ist.

8. Verteilmaschine nach einem oder mehreren der vorstehenden Ansprüche, **dadurch gekennzeichnet, daß** die Aussparung (26) sich zumindest um das Maß (A), welches dem Durchmesser (D) der Übertragungsleitung (25) entspricht, über den Aufschubbereich (24) der pneumatisch beaufschlagten Leitung (16) hinauserstreckt.

9. Verteilmaschine nach einem oder mehreren der vorstehenden Ansprüche, **dadurch gekennzeichnet, daß** die Anschlußstutzen (21) für die pneumatisch beaufschlagten Leitungen (16) als Adapter ausgebildet sind, daß die Aussparung (26) jeweils in den Adaptern (22) angeordnet ist.

## Claims

1. Agricultural distributor, having monitoring apparatuses which include pneumatic pipes and transfer pipes, **characterised in that** the transfer pipes (12, 25) are disposed at least partially internally of the pneumatic pipes (10, 16).

2. Distributor according to claim 1, **characterised in that** the transfer pipes (12) are introduced into the pipes (10) through bores (14) provided in the walls (13) of the pipes (10).

3. Distributor according to claim 1, wherein the distributor is in the form of a seed drill for sowing single seeds and includes low-pressure vacuum pipes (10) which lead from a suction fan (5) to separating elements (9), **characterised in that** the transfer pipes (12) extend through the low-pressure vacuum pipe (10) as far as the separating elements (9).

4. Distributor according to one or more of the preceding claims, **characterised in that**, in order to pass the transfer pipe (12) through the wall (13) of the low-pressure vacuum pipe (10), a respective opening (14) is provided in the transfer pipe (12) and corresponds to the diameter of the pipe (12), **in that** a securing bandage (15), which preferably comprises a shrinkable hose, is disposed on the pipe (10) in order to secure the transfer pipe (12) in the bore (14) and on the pipe (10), and **in that** the transfer pipe (12) is situated between the outer wall of the pipe (10) and the bandage (15).

5. Distributor according to one or more of the preceding claims, **characterised in that** the transfer pipe (12) is secured, by means of the bandage (15), on the outside of the low-pressure vacuum pipe (10) and hence on the suction pipe (10).

6. Distributor according to claim 1, **characterised in that** the connection-pieces (21) for the pneumatic pipes (16) each have, on their side associated with the pipes (16), a recess (26) which is adapted to the cross-section of the transfer pipes (25), and **in that** the transfer pipes (25) are laid in the recesses (26).

7. Distributor according to one or more of the preceding claims, **characterised in that** the recess (26) is in the form of a groove and has an arcuate configuration at its base (27).

8. Distributor according to one or more of the preceding claims, **characterised in that** the recess (26) extends beyond the slide-on region (24) of the pneumatic pipe (16) by at least the dimension (A) which corresponds to the diameter (D) of the transfer pipe (25).

9. Distributor according to one or more of the preceding claims, **characterised in that** the connection-pieces (21) for the pneumatic pipes (16) are in the form of adapters, and **in that** the recess (26) is disposed in each of the adapters (22).

## Revendications

1. Distributeur agricole comportant des conduites pneumatiques et des installations de surveillance avec des lignes de transmission,
**caractérisé en ce que**
les lignes de transmission (12, 25) sont installées au moins en partie dans les conduites pneumatiques (10, 16).

2. Distributeur agricole selon la revendication 1,
**caractérisé en ce que**
les lignes de transmission (12) passent dans des perçages (14) réalisés dans les parois (13) des conduites (10) pour y pénétrer.

3. Distributeur agricole selon la revendication 1,
**caractérisé en ce que**
le distributeur est un semoir de précision comportant des conduites à dépression (10) reliant un venitilateur d'aspiration (5) à des organes séparateurs (9),
**caractérisé en ce que**
les lignes de transmission (12) passent dans la conduite de dépression (10) pour arriver jusqu'aux organes séparateurs (9).

4. Distributeur agricole selon rune ou plusieurs des revendications précédentes,
**caractérisé en ce que**
pour le passage de la ligne de transmission (12) à travers la paroi (13) de la conduite à dépression (10) il est prévu chaque fois un passage (14) de diamètre correspondant à la ligne de transmission (12), dans la conduite (10), et pour bloquer la ligne de transmission (12) dans le perçage (14) et sur la conduite (10), il est prévu un manchon de blocage (15), de préférence rétractable sur la donduite (10) pour que la ligne de transmission (12) se trouve entre la paroi extérieure de la conduite (10) et le manchon (15).

5. Distributeur agricole selon une ou plusieurs des revendications précédentes,
**caractérisé en ce que**
le manchon ou bandage (15) fixe la ligne de transmission (12) sur le côté extérieur de la conduite à dépression (10) et ainsi sur la conduite d'aspiration (10).

6. Distributeur agricole selon la revendication 1,
**caractérisé en ce que**
les ajutages (21), pour les conduites pneumatiques (16), comportent sur leur côté tourné vers les conduites (16), chaque fois une cavité (26) de section adaptée à celle des lignes de transmission (25), et les lignes de transmission (25) sont placées dans les cavités (26).

7. Distributeur agricole selon une ou plusieurs des revendications précédentes,
**caractérisé en ce que**
la cavité (26) est réalisée sous la forme d'une rainure dont le fond (27) est en arc de cercle.

8. Distributeur agricole selon une ou plusieurs des revendications précédentes,
**caractérisé en ce que**
la cavité (26) dépasse au moins de la longueur (A) correspondant au diamètre (D) de la ligne de transmission (25), par rapport à la zone d'emmanchement (24) de la conduite pneumatique (16).

9. Distributeur agricole selon une ou plusieurs des revendications précédentes,
**caractérisé en ce que**
les ajutages (21) des conduites pneumatiques (16) sont réalisés sous forme d'adaptateurs et la cavité (26) est réalisée chaque fois dans un adaptateur (22).
